# FASCICULE DE BREVET EUROPEEN

(11) **EP 2 731 474 B1**
(45) Date de publication et mention de la délivrance du brevet: **12.09.2018**
(21) Numéro de dépôt: 12744077.4
(22) Date de dépôt: 11.07.2012
(51) Int. Cl.: A47J 27/00

(54) **ARTICLE CULINAIRE A PAROI LATERALE CHAUFFEE ET PROCEDE**
KÜCHENARTIKEL MIT EINER BEHEIZTEN SEITENWAND UND VERFAHREN
KITCHENWARE ITEM COMPRISING A HEATED SIDE WALL, AND METHOD

(30) Priorité: 13.07.2011 FR 1156376
(43) Date de publication de la demande: 21.05.2014
(73) Titulaire: SEB S.A., 69130 Ecully (FR)
(72) Inventeur: BONNEL, Jocelyn, 73310 Vions (FR)
(74) Mandataire: Bourrières, Patrice
(86) Numéro de dépôt international: PCT/FR2012/051637
(87) Numéro de publication internationale: WO 2013/007948

(56) Documents cités:
- DE-A1- 3 020 069
- US-A- 2 265 295
- US-A1- 2005 109 761
- US-B1- 6 433 317

## Description

L'invention concerne un article culinaire devant servir de récipient pour cuire ou plus généralement chauffer des aliments.

Est déjà connu un tel article comprenant :
- un récipient adapté à recevoir des aliments et comprenant un substrat qui présente un fond et une paroi latérale se dressant en périphérie du fond, et une résistance électrique chauffante disposée à l'endroit de la paroi latérale du récipient,
- une source électrique (production d'électricité) est raccordée à la résistance électrique, pour l'alimenter électriquement.

Un tel article est connu dans US2005/0109761.

Ainsi, la source électrique n'est pas le secteur ; elle est portée par l'article.

JP-A-2008142205 divulgue un article culinaire 2 comportant une poignée 3 comprenant une batterie 10 qui alimente une résistance chauffante disposé dans l'épaisseur du fond de l'article (les repères sont ceux utilisés dans ce document). Le principe général d'un article culinaire comportant une poignée comprenant une source d'énergie qui alimente, au sens électrique, un dispositif extérieur à la poignée est donc connu.

Toutefois, JP-A-2008142205 a pour but d'apporter une solution permettant à l'article culinaire d'être utilisé de façon nomade ou comme plat de service, loin d'une cuisine ou plus généralement d'une source de chauffe de type : plaque électrique, flamme issue d'une source de gaz ou bobine d'induction pour un chauffage par induction de la calotte. La solution est un appareil portable à la main, relativement peu encombrant et apparemment pratique d'emploi et performant thermiquement.

Un problème demeure malgré tout concernant notamment la performance thermique, surtout si l'application visée n'est pas particulièrement une utilisation nomade, comme c'est le cas ci-après. Comme objectifs ici visés, on cherche en particulier, dans le cadre d'une utilisation préférée en intérieur, près d'une source de chauffe disponible :
- à limiter les pertes thermiques de la calotte quand elle est chauffée, et/ou
- à obtenir (ou a minima tendre vers) une chauffe homogène de cette calotte, et/ou
- à favoriser un maintien au chaud des aliments en fin de cuisson, notamment en liaison avec l'emploi d'un couvercle.

Une solution proposée est que le premier article présenté ci-avant soit tel que le substrat de sa calotte soit formé d'au moins une couche métallique, et que la résistance électrique chauffante soit disposée :
- soit à l'extérieur du substrat métallique,
- soit noyée dans ledit substrat, au sein :
   * soit d'un matériau métallique électriquement conducteur, moulé,
   * soit de plusieurs couches métalliques électriquement conductrices liées entre elles, sans adhésif, par déformation et/ou liaison métallique physico-chimique.

On doit comprendre :
- sans adhésif comme excluant tout adhésif collant,
- à l'extérieur du substrat métallique comme « en surface », fixé à lui, contre lui ou séparé de lui par une fine couche, typiquement une couche électriquement isolante,

- liaison métallique, comme une liaison chimique qui permet la cohésion des atomes d'un ou plusieurs métaux placés en contact (comme par exemple dans un brasage, voire un colaminage),
- couches liées entre elles par déformation, comme des métaux différents liés entre eux par un soudage sans fusion utilisant la déformation plastique des métaux en contact (par pression exercée lors exemple d'une frappe, notamment à froid,) et/ou la diffusion de matière (comme dans un colaminage) ; voir http://hal-ensmp.archives-ouvertes.fr/docs/00/57/05/47/PDF/Kaabi-Bienvenu-Ryckelynck_MatA_riaux_2010_5_p.pdf.

On doit ainsi diminuer l'effet radiateur, favorisant de la sorte, en tout ou partie :
- une homogénéisation de la température sur la paroi latérale,
- possiblement une augmentation de la vitesse de chauffe,
- une fonction garde au chaud, une fois la cuisson terminée.

On doit pouvoir par ailleurs diminuer les épaisseurs de matières, voire choisir des matériaux moins favorables à la diffusion thermique (inox en place d'aluminium par exemple, tout en obtenant une même efficacité dans la répartition thermique dans l'ensemble du récipient), tout en garantissant une cuisson homogène et saine, notamment en limitant le gradient thermique entre le fond et la paroi latérale, ce qui peut en outre être favorable à la longévité du revêtement anti-adhérent qui typiquement recouvre la face intérieure de la couche métallique de la calotte et souvent (tel le PTFE) est sensible aux températures trop élevées (plus de 300°C, voire 250°C).

On va par ailleurs pouvoir ainsi éviter d'avoir, au moins en début de fabrication, à différencier les calottes ci-dessus (pourvues de cette résistance électrique) de celles qui en seront dépourvues. A ce sujet, la calotte de JP-A-2008142205 présente l'inconvénient que la résistance électrique est disposée au milieu de la paroi métallique de fond.

Pour satisfaire avantageusement au cas d'une utilisation de chauffe intense, quelle que soit la position (noyée ou en surface) de la résistance, on conseille par ailleurs que le fond de la calotte, qui présente une surface inférieure à poser, de façon stable, en face d'une source externe de chauffage comprenant l'une parmi : une plaque électrique, une flamme issue d'une source de gaz, une bobine d'induction pour un chauffage par induction du récipient, est adaptée pour résister à la chaleur de ladite source externe de chauffage, et comprend pour cela :
- une structure de substrat multicouches (avec, pour des raisons mécaniques et thermiques, a priori au moins trois telles couches qui peuvent être en métaux ou alliages métalliques différents),
- et/ou au moins :
   * une empreinte de rigidification,
   * ou un insert en un métal magnétisable (par exemple ferromagnétique) qui est fixé à une couche métallique malléable du substrat et/ou qui est plus dur que cette couche malléable (côté surface inférieure).

Ainsi on alliera performances thermique et mécanique, avec une bonne tenue dans le temps, quelle que soit la source externe de chauffage parmi celles précitées, ceci pouvant être encore amélioré si la résistance électrique est disposée exclusivement à l'endroit de la paroi latérale du récipient. En effet, on pourra ainsi dissocier les questions de maîtrise de la déformation du fond et celles évoquées en haut de page 2 en optimisant chacune.

Parmi les possibles récipients (appelés aussi calottes) ici recommandés, on en envisage donc un à fond renforcé et/ou compatible avec un chauffage par induction. Ce récipient à fond et paroi latérale monoblocs et en un même matériau métallique (par exemple de l'aluminium) sera favorablement extérieurement, sous son fond, lié (bonded en anglais) avec une couche métallique (tel de l'aluminium) plus malléable que celle définissant une coupelle inférieure par exemple en acier ferritique, donc magnétisable ou ferromagnétique, recouvrant ladite couche métallique plus malléable. Une frappe à chaud (pour la réalisation du fond multicouche) associée à un emboutissage (pour la réalisation de la paroi latérale) pourront alors en particulier convenir, en tant que technique de fabrication.

Pour renforcer toutefois la facilité de fabrication du récipient et sa maintenance éventuelle, on recommande malgré tout que, la paroi latérale présentant une surface intérieure orientée vers l'intérieur creux du substrat et une surface extérieure opposée, la résistance électrique chauffante soit un dépôt ainsi fixé, à l'endroit de la surface extérieure de la paroi latérale, à une couche électriquement isolante qui sera alors elle-même un dépôt ainsi fixé au substrat métallique.

Pour favoriser une fabrication rapide et l'obtention d'un article fiable dans le temps, on conseille, en outre, que la résistance électrique, en particulier si elle est en surface et non noyée dans le substrat, plutôt que de comprendre des fils individuellement gainés d'isolant électrique protecteur, soit interposée entre une couche isolante électrique étendue à plat contre la (l'une des) couche(s) métallique(s) du substrat et une couche de revêtement pour la protection mécanique et/ou physico-chimique.

Si la résistance électrique est noyée dans le substrat métallique, on préfèrera qu'elle y soit disposée exclusivement à l'endroit de la paroi latérale du récipient et y soit entourée, là, d'une couche électriquement isolante la séparant dudit matériau métallique ou desdites couches métalliques qui l'environnent, ce matériau ou ces couches métalliques étant de préférence électriquement conductrices.

Ainsi, on alliera fiabilité, atteinte de la chauffe latérale attendue et respect des cadences et conditions de fabrication souhaitées, y compris en termes de maîtrise de la déformation du fond dans le temps. Si elle est noyée dans le substrat, on préfèrera même une résistance à fil(s) individuellement gainé(s).

De préférence, la source électrique d'alimentation de la résistance, dont est donc pourvue la paroi latérale de la calotte, sera prévue sur une poignée fixée au récipient pour le soulever et ainsi tenir en main l'article. Ainsi, on pourra tirer parti de l'espace qui est typiquement libre dans une poignée, compte tenu de ses dimensions minimum pour une prise en main fonctionnelle.

Pour rendre encore davantage pratique d'emploi et peu encombrant l'article culinaire par rapport à celui de JP-A-2008142205, on conseille aussi :
- que la poignée soit fixée de façon amovible au récipient par des moyens de fixation qui sont pour cela séparables entre eux, (la source électrique pourra alors par exemple servir pour manoeuvrer le(s) moyen(s) de fixation amovible alors prévu(s) sur la poignée),
- et que cette résistance électrique et la poignée présentent des premières et secondes bornes de contact électrique venant en contact entre elles, quand la poignée et le récipient sont fixés ensemble (larges possibilités de contacts du fait qu'une poignée se place latéralement, à la différence par exemple d'un couvercle qui vient par-dessus).

Par ailleurs, et de préférence, la résistance électrique s'étendra sur au moins l'essentiel du tour de la paroi latérale du récipient et/ou de sa hauteur.

Le fait que la résistance électrique chauffante s'étende en surface sur une étendue périphérique notable de la paroi latérale, et pas sur (dans) le fond comme dans JP-A-2008142205 où seuls deux fils remontent à un endroit précis au milieu de cette paroi, est ici favorable puisqu'on peut ainsi choisir avec davantage de souplesse l'endroit du raccordement avec l'élément porteur de la source électrique d'alimentation de la résistance, tant en positionnement radial qu'en hauteur s'il s'agit d'une poignée.

Un autre aspect positif sera atteint si, dans l'état fixé de la poignée, ses moyens de fixation sont en contact avec la face tant intérieure (côté aliments) qu'extérieure de la paroi latérale de la calotte, satisfaisant à une fixation ainsi qu'un raccordement électrique facilités de la poignée, que les bornes (ou zones) de contact prévues pour cela soient localisées (figures 1, 15) ou non (figure 20).

Ceci sera même encore plus intéressant si les moyens de fixation récipient/poignée comprennent deux mors formant pince, mobiles l'un par rapport à l'autre pour fixer la poignée au récipient, lesdites secondes bornes de contact électrique étant disposées sur l'un (au moins) de ces mors.

Dans une réalisation intéressante de ce type, on prévoit d'ailleurs que les moyens de fixation comprennent, sur la poignée, des mors d'une pince et, sur la calotte, une partie de la paroi latérale à proximité de son bord périmétrique supérieur que les mors viendront favorablement directement pincer, par-dessus, l'un de ces mors étant donc pourvu desdites secondes bornes de contact électrique.

Pour une performance électrique permettant une cuisson de qualité, notamment s'il s'agit d'une poêle pouvant être utilisée pour la cuisson saisie de viande, on recommande que les bornes de contact électrique de l'élément porteur de la source électrique d'alimentation de la résistance soient repoussées par des moyens de rappel élastique et limitent, avec les bornes du récipient, la résistance de contact à moins 100mOmhs, et de préférence à moins de 10mOmhs.

Et pour une qualité des contacts électriques, on recommande que :
- lesdits moyens de rappel élastique sur les secondes bornes de contact électrique soient utilisés avec des bornes en saillie et que des premières cornes de contact soient des bornes en creux,
- ou que des moyens d'indexation soient prévus sur l'élément porteur de la source électrique et sur la calotte pour les indexer l'une par rapport à l'autre, lorsque l'on doit fixer le premier à la seconde.

A nouveau pour la performance électrique, on conseille encore que chaque borne de contact électrique présente une section d'au moins 0,75mm² pour résister à un courant de 8 à 14 A.

Et pour favoriser une utilisation du récipient comme plat de service, ou à distance d'une prise reliée au secteur, on recommande que, si une poignée est utilisé, elle comprenne un corps creux et que le moyen d'alimentation électrique dont elle est pourvue comprenne une source rechargeable d'énergie électrique, telle une batterie, logée dans ledit corps et reliée à des bornes de rechargement dont le corps est pourvu, la poignée étant alors pourvue de moyens d'étanchéité protégeant ladite source rechargeable d'énergie électrique contre l'humidité.

Ainsi, si la poignée est amovible, on pourra, si nécessaire, la nettoyer à l'eau (passer sous l'eau éventuellement), bien qu'il s'agisse d'une « poignée électrique ».

D'autres caractéristiques et avantages de l'invention pourront encore ressortir de la description ci-après faite en référence aux dessins annexés fournis à titre d'exemple. Dans ces dessins :

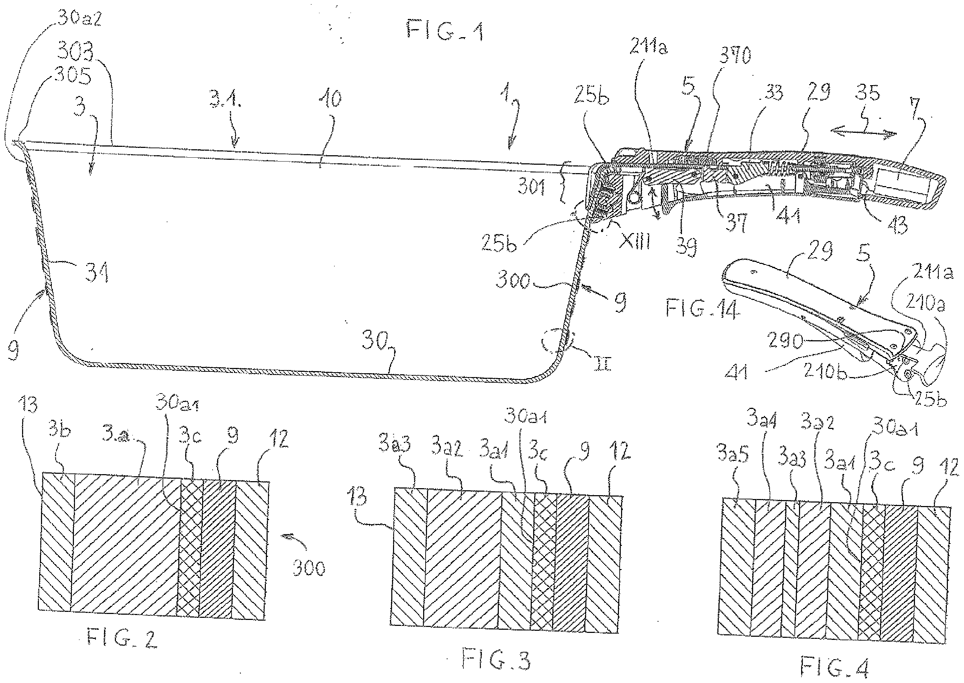

- la figure 1 représente une coupe verticale d'un article culinaire pour la cuisson d'aliments et montre l'intérieur d'une poignée utilisable;
- les figures 2, 3, 4 sont des vues agrandies des couches pouvant constituer la calotte, à l'endroit où existe la résistance chauffante ; la figure 2 est l'agrandissement II de la figure 1,

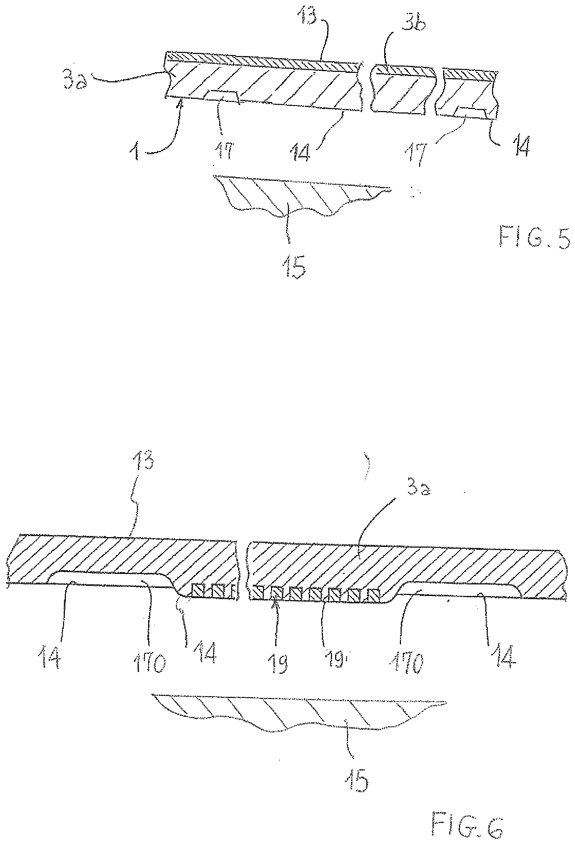

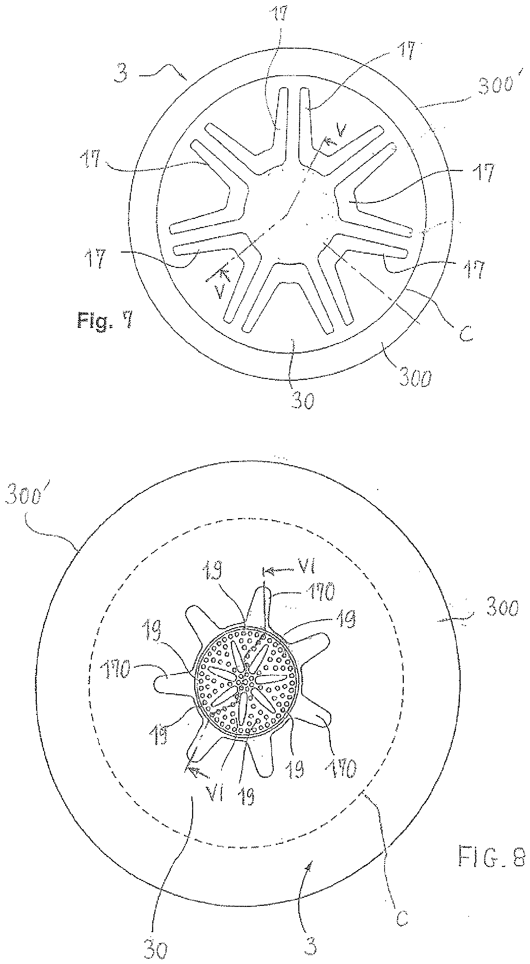

- les figures 5, 6 correspondent respectivement aux coupes V-V et VI-VI des figures 7, 8 qui montrent chacune en vue de dessous un fond mécaniquement renforcé, et

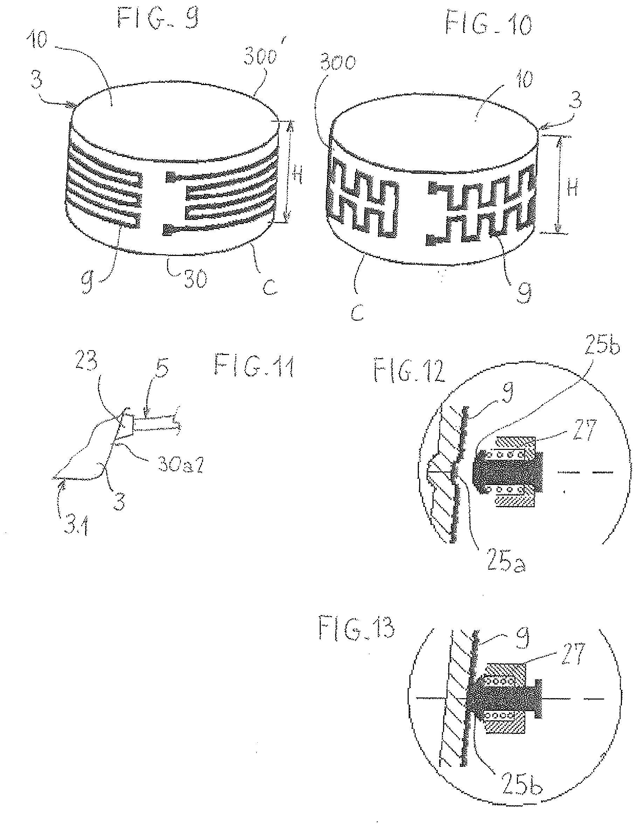

- les figures 9, 10 montrent deux exemples de formes de la résistance électrique,
- la figure 11 montre une fixation de poignée à une calotte via une embase ;
- les figures 12, 13 montrent une possible réalisation de l'interaction entre les bornes de la poignée et du récipient, dans une solution « poignée amovible » a priori,
- la figure 14 montre une vue extérieure de la poignée de la figure 1, ici seule, mors ouverts,

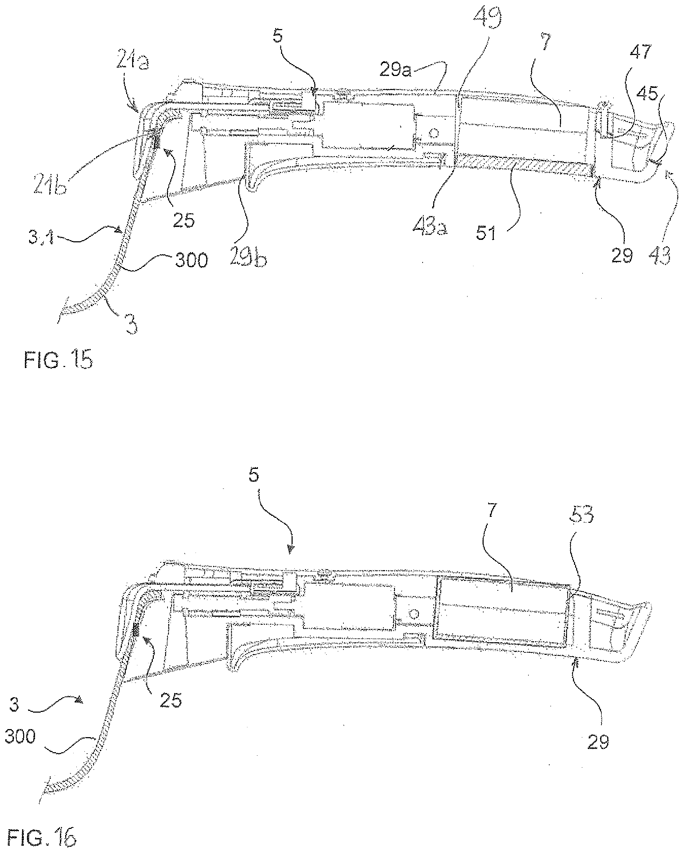

- les figures 15, 16 représentent des poignées amovibles comprenant respectivement un capot et un joint d'étanchéité et une source d'énergie rechargeable noyée dans la matière formant le corps de préhension;

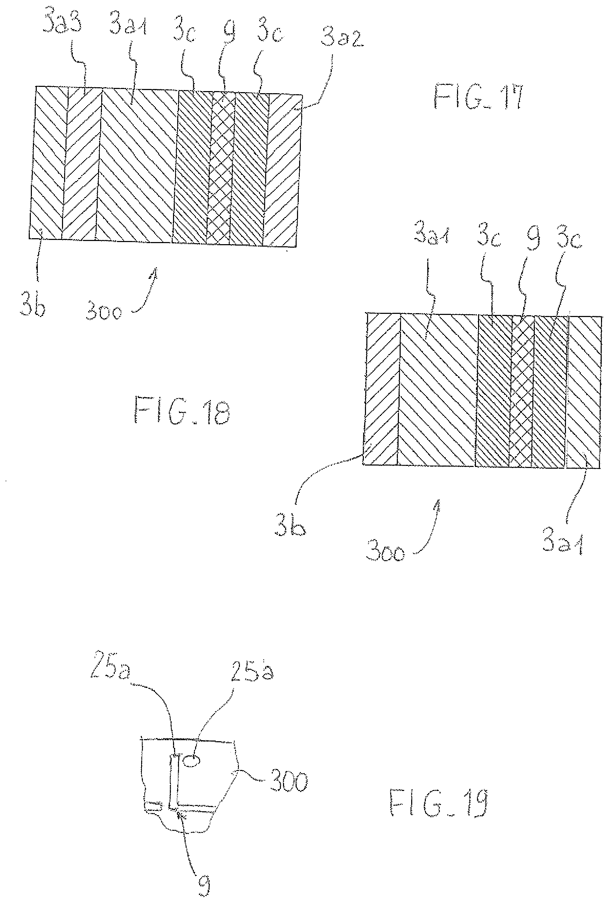

- les figures 17, 18 sont chacune une alternative (toujours en coupe) aux représentations des figures 2-4 ;
- figure 19, une vue très locale d'un haut de calotte, avec une circulation électrique passant dans le substrat,

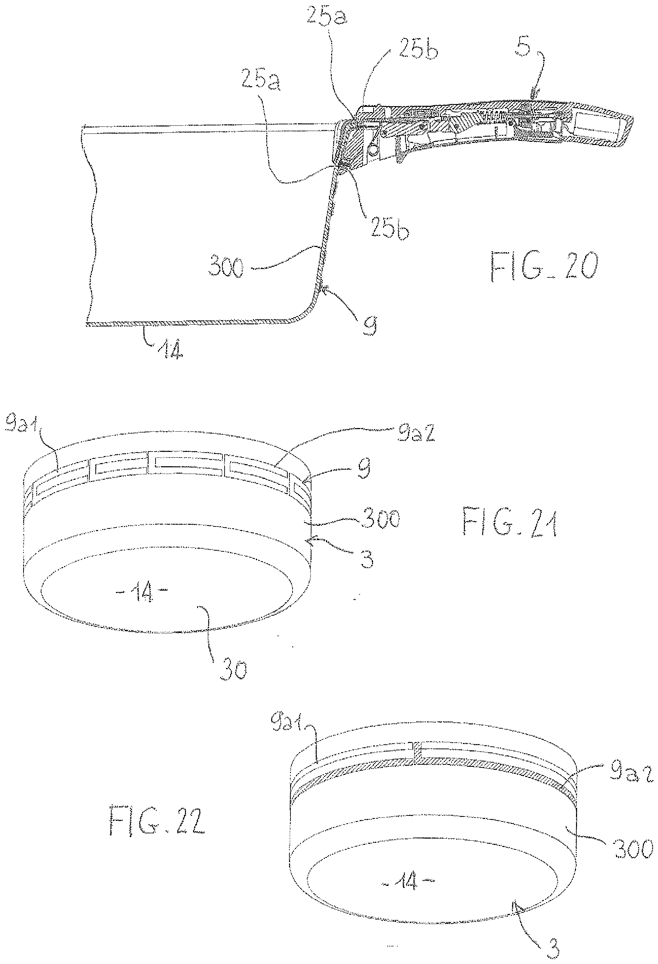

- figure 20, une solution où de l'énergie électrique circule dans le substrat métallique de la calotte,
- figures 21, 22, on voit deux exemples où, pour créer le contact électrique récipient/poignée, la position angulaire de la poignée autour du récipient importe peu. Il n'y a pas de position prédéterminée du fait de l'emplacement retenu pour les bornes de contact récipient/poignée. Par ailleurs, on a profité de ces illustrations pour présenter deux cas où il y a une résistance formée de plusieurs résistances ; dans le premier cas, les résistances sont indépendantes, dans le deuxième elles sont connectées entre elles,

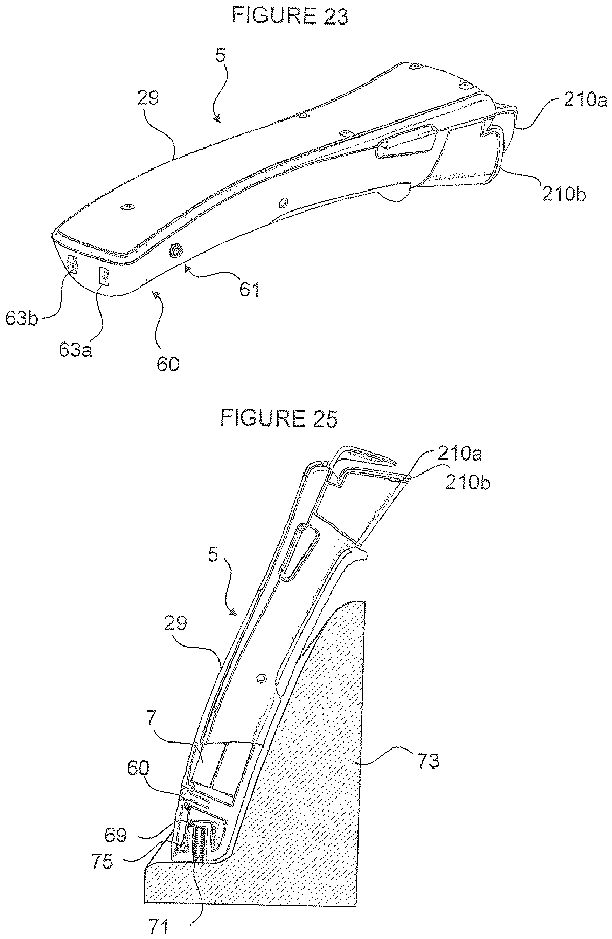

- figures 23, 24, 25, on voit des illustrations en liaison avec la recharge de la source d'alimentation prévue sur l'ustensile de cuisine considéré, accessoire du récipient.

Dans ce qui suit, et d'ailleurs dans tout le texte, ainsi que sur les illustrations, on doit considérer que les variantes peuvent en tout ou partie se combiner.

Figures 1, 2 notamment, on voit donc un article culinaire 1. Il comprend :
- une calotte 3 formée sur la base d'un substrat métallique comprenant au moins une couche métallique 3a et adaptée pour recevoir intérieurement des aliments,
- et, en tant qu'exemple d'ustensile de cuisine associé, une poignée 5 fixée à la calotte pour la soulever et ainsi tenir en main l'article.

L'ustensile de cuisine retenu sera utilitaire pour ce récipient (éclairage, brassage, élément pour porter...). Il aura, en lui-même, une fonction autre que le (seul) chauffage électrique ou par induction du récipient. De préférence, il s'agira d'un ustensile de cuisine pouvant être pris en main. On pourra alors notamment le déplacer et/ou le tenir pour le faire fonctionner, le porter et/ou porter le récipient grâce à lui. Une poignée est donc un bon exemple.

La poignée 5 est pourvue d'une source d'alimentation (production) électrique 7 raccordée à une résistance électrique chauffante 9 dont est pourvue la calotte, ceci pour l'alimentation électrique de cette résistance.

La calotte présente un fond 30 et une paroi latérale 300 qui se dresse vers le haut, en périphérie du fond, jusqu'à l'ouverture supérieure 10.

La résistance électrique 9 est disposée à l'endroit de la paroi latérale, en surface extérieure de la (des) couche(s) métallique(s) du substrat. Il s'agit a priori d'une piste ou d'un fil.

Figure 2, le substrat métallique comprend une seule couche métallique 3a (aluminium ou acier inox en particulier). Intérieurement, ce substrat est doublé d'un revêtement anti-adhérent 3b, par exemple en ou à base de PTFE. Ici en face extérieure, la couche métallique 3a est revêtue d'une couche électriquement isolante 3c. Cette couche 3c aura de préférence été fixée par dépôt. Elle présentera de préférence une épaisseur d'au moins 20 à 50 microns, pour être efficace compte tenu des contraintes électriques de la résistance 9, laquelle est fixée à la couche isolante 3c, extérieurement.

La résistance électrique 9 sera de préférence fixée par dépôt autour du substrat métallique, ici contre la couche isolante 3c. Ainsi, sa fixation s'opérera alors lors de sa pose, donc en l'espèce du dépôt.

La résistance 9 peut être une piste métallique dont les fils ne sont pas gainés d'isolant électrique.

Cette piste métallique peut être fixée par projection thermique. Pour une protection physico-chimique, on conseille alors de revêtir extérieurement cette résistance d'un dépôt de revêtement protecteur 12. On recommande une protection contre l'oxydation. Un revêtement 12 électriquement isolant sera préféré.

La résistance 9 peut en alternative être à base de polymère qui, déposé, doit être protégé mécaniquement par le revêtement protecteur 12.

Autre alternative : la résistance 9 peut être à base d'émail chargée de particules conductrices. Alors, il ne sera pas forcément nécessaire de l'enrober d'un revêtement 12 protecteur mécanique et/ou physico-chimique venant se fixer, a priori par et lors de son dépôt autour de la résistance 9 déjà fixée à la calotte.

Figures 3,4, le substrat métallique comprend plusieurs couches métalliques (métal ou alliages métalliques), respectivement 3a1, 3a2, 3a3 et 3a1, 3a2, 3a3, 3a4, 3a5.

Couches 3a1, 3a2, 3a3 : par exemple acier inox/aluminium/ acier inox ; couches 3a1, 3a2, 3a3, 3a4, 3a5 : par exemple acier inox/aluminium/ acier inox (ou cuivre)/aluminium/ acier inox.

On conseille des couches colaminées.

Extérieurement, on retrouve encore la résistance 9 fixée au substrat considéré, avec interposition de la couche électriquement isolante 3c et possible présence du revêtement protecteur 12 extérieur. Le dépôt intérieur anti-adhérent 3b n'est pas indispensable sur de l'acier inox.

A l'endroit du fond 30, on retrouve le substrat et, si nécessaire, ce revêtement intérieur anti-adhérent 3b, ici sans les couches 3c, 9 ; donc sans le revêtement 12.

Figures 2, 5, la calotte comprend une seule couche métallique 3a (par exemple acier). Si elle est en aluminium et qu'un chauffage par induction est souhaité, le substrat de la calotte comprendra au moins une autre couche, ou un insert, en métal magnétique. Un revêtement intérieur 13 est possible, comme figure 5.

Figures 5, 6, on voit que chaque fond 30 présente une surface inférieure 14 à poser en face de la source 15 externe de chauffage considérée, et une surface supérieure 13 recevant les aliments.

La source 15 est l'une parmi une plaque électrique, une flamme issue d'une source de gaz et une bobine d'induction pour un chauffage par induction de la calotte, comme figure 6 où, au chauffage, le fond se cambre un peu, de sorte que la surface 14 est finalement, vers 150-200°C et notamment figure 5 ou 6, plane ou légèrement concave vers le haut.

Cette surface inférieure 14, et plus généralement chaque fond 30 est adapté pour résister à la chaleur de la source externe de chauffage considérée.

Comme montré respectivement sur ces figures 5, 6 complétées par les figures 7, 8, la surface inférieure 14 comprend pour cela ici au moins une empreinte 17 de rigidification ou un insert 19 en un métal plus dur (par exemple acier) que celui (par exemple aluminium) de la couche 3a à laquelle appartient la surface inférieure 14 et qui est fixé à cette couche pour la définir en partie.

L'empreinte 17 est vide de matière. Elle ne traverse pas la couche métallique dans laquelle elle est formée. Il peut en être de même pour l'/les empreintes 170 qui peu(ven)t exister en complément d'un insert en métal plus dur comme figures 6, 8 où cet insert est embouti (par-dessous) dans une partie de l'épaisseur du substrat, ici le métal de la couche 3a. L'insert peut être une plaque perforée facile à fixer, comme expliqué, par emboutissage.

Encore une autre solution mécaniquement résistance dans le temps pour le fond 30 est donc aussi celle correspondant à la figure 4 où les cinq couches 3a1, 3a2, 3a3, 3a4, 3a5 , ici acier inox/aluminium/ acier inox (ou cuivre)/aluminium/ acier inox, assurent l'effet attendu, sans insert ni empreinte. Idem pour un triple couches 3a1, 3a2, 3a3 : acier inox/aluminium/ acier inox.

Même si une disposition côté intérieur (surface concave) du substrat n'est pas exclue, la résistance électrique 9 est, pour une performance de fabrication (choix plus large du type de résistance, fiabilité en liaison avec la fabrication de la calotte) figurée comme disposée côté extérieur 30a1 du substrat, à l'endroit de la paroi latérale 300.

Comme montré figures 9, 10, on recommande que cette résistance électrique 9, qui peut avoir plusieurs formes, s'étende sur au moins l'essentiel du tour (périmètre) et de la hauteur H de la paroi latérale 300, cette hauteur H étant définie entre le bord périmétrique supérieur 303 et le fond 30 qui est globalement (considéré comme) horizontal et plan (même si dans la réalité ce fond est légèrement convexe vers le haut pour favoriser la résistance mécanique aux déformations répétées à chaud). La ligne C figures 7, 8 marque symboliquement la limite entre 30 et 300.

La résistance électrique 9 définit des méandres pour l'homogénéité du chauffage.

Avec les figures 1, 15, on comprend que la poignée 5 pourra être fixée de façon amovible au récipient 3.1 auquel appartient la calotte 3, et ce par des moyens de fixation, 21a, 21b, qui seront pour cela séparables entre eux.

Ces premiers et seconds moyens de fixation 21a, 21b pourront être prévus respectivement sur la poignée et sur une embase 23 extérieurement portée par la calotte et fixée à elle, contre sa surface extérieure 30a2, par exemple par vissage ; voir figure 11 dans ce cas, et comme dans DE-102007054022 A1, les premiers et seconds moyens de fixation 21a, 21b pourront définir un système à glissières incurvées définies sur la poignée et l'embase et construit autour des moyens 4, 8, 11 prévus à ce document. Prévoir les moyens 21a, 21b sur la poignée et la calotte 3 est également approprié.

La poignée 5 sera pourvue de secondes bornes 25b venant en contact avec des premières bornes 25a prévues sur la résistance électrique 9, ceci de façon qu'un contact électrique séparable soit établi quand la poignée et la calotte sont fixées ensemble ; voir figures 1, 12, 13.

Quant à la résistance 9, on recommande qu'elle s'étende alors sur au moins l'essentiel du tour (périmètre) de la paroi latérale 300 et/ou de sa hauteur H.

Dans l'exemple des figures 1, 14, les premiers et seconds moyens de fixation 21a, 21b comprennent respectivement, sur la poignée, des mors 210a, 210b d'une pince et, sur la calotte, une partie 301 de sa paroi latérale, à proximité immédiate de son bord périmétrique supérieur 303 dont tout le tour présente un rebord extérieur 305.

Les mors 210a, 210b viennent pincer la partie 301 par-dessus. L'un de ces mors (de préférence un seul ; le mors fixe 210b) est pourvu des secondes bornes 25b de contact électrique.

Bien qu'il y ait intérêt à une telle pince à mors mobiles en translation (voir par exemple EP-1991098 pour plus de détails sur la manière d'assurer ce mouvement), les mors pourraient notamment être mobiles autrement, et la fixation se faire sur l'embase où pourrait aussi s'opérer le contact électrique poignée-récipient. Ainsi, les premières bornes 25a seraient alors portées par cette embase pour être au contact des secondes bornes 25b lors du pincement de fixation.

Pour déplacer le mors mobile 210a vis-à-vis du mors fixe 210a situé en face, on utilise figure 1 un coulisseau 33 monté en translation selon la direction longitudinale 35 par rapport au corps 29, et des première et seconde bielles pivotantes 37, 39. La seconde bielle agit directement sur le mors mobile 210a. Un bouton de manoeuvre 41 monté basculant sur le corps 29 sollicite la seconde bielle 39d et par là la chaîne articulée 33, 37, 39, via un ergot 370 traversant une lumière de la tige 211a qui se termine par le mors 210a. Davantage de détails sont disponibles dans EP 2007260. Le corps 29 est conformé pour une préhension à la main de la poignée et est creux. Dedans, une connexion électrique 43, par exemple filaire, relie la source électrique 7 et la/les bornes 25b.

Concernant les premières et secondes bornes 25a, 25b, on voit figure 12 qu'elles seront de préférence respectivement en creux (concaves) et en saillie (convexes), favorisant ainsi un bon positionnement relatif entre elles (la figure 13 schématise une liaison à plat, aussi possible).

On recommande par ailleurs que des moyens de rappel élastique 27 (tels des ressorts) soient prévus sur (derrière) la/les secondes bornes de contact, pour les solliciter naturellement vers la/les premières bornes. Figure 12, la borne 25b est au repos, repoussée vers le (mais restant à distance du) récipient par le ressort ou moyen équivalent; figure 13, le moyen élastique 27 est sous tension et sollicite la borne 25b au contact de la résistance 9.

On recommande en outre que :
- ces bornes 25b limitent, avec celles 25a du récipient, la résistance de contact à 100mOmhs et de préférence 10mOmhs,
- chaque borne 25a, 25b présente une section d'au moins 0,75mm² pour résister à un courant de 8 à 14A.

Dans le cas d'une poignée 5 amovible, on pourra avantageusement prévoir deux bornes de contact sur l'extrémité avant 290 du corps de préhension 29 de la poignée (figure 14) ; en particulier section minimum de 0,75mm² capables de résister à des courants de l'ordre de 10A éventuellement montés sur ressort pour limiter la résistance de contact à 100mOmhs et de préférence 10mOmhs.

Dans le cas d'une poignée fixe sur le récipient, donc sans borne 25a, 25b, les fils venant de la source d'alimentation électrique 7 pourront être directement soudés à la piste chauffante 9, la connectique pouvant être logée dans l'embase précitée de fixation 23.

Avec une source d'énergie de 12V, on doit pouvoir chauffer une résistance de 0,3-1 Ohm à 60-100W, ceci étant approprié pour les buts visés, non pas a priori de cuisson des aliments (réalisés par le chauffage du fond 3, via la source principale de chaleur : gaz, électrique ou induction), mais de limitation des pertes thermiques (effet radiateur de la paroi latérale) et de chauffe homogène de la calotte.

La puissance effective à fournir dépendra du type d'article et du type de recette ; par exemple :
- puissance importante sur une courte durée pour des chauffes rapides (de l'ordre de 5-15min) : chauffage d'eau, de soupe... ; par exemple 80-90W,
- puissance moins importante, par exemple 40-50W pour des cuissons de longue durée (plus de 30mn, voire plusieurs heures, pour des mijotages).

Pour une casserole de diamètre 20cm, on peut estimer les pertes par convection sur la paroi latérale d'un récipient conventionnel connu (par exemple une poêle) à 44W (10W/m².°C). Pour une surface émissive (exemple un revêtement PTFE d'émissivité 0,95) chauffé à 100°C, on peut estimer les pertes par radiation à 36W.

Avec une résistance chauffante 9 de 80W (sans perte vers l'extérieur comme favorablement dans la solution des figures 17, 18, ou figure 2-4 avec un revêtement 12 isolant thermique) on compense ces pertes ; si la résistance 9 restitue une puissance de 80W (toujours sans perte vers l'extérieur) on chauffe la paroi latérale 300.

Dans tous les cas on diminue l'effet radiateur. Pour cela, on aura compris que, lorsque la piste résistive 9 est alimentée en électricité, elle s'échauffe et transmet de la chaleur à la paroi latérale 300 qui la porte, laquelle n'est ainsi plus chauffée seulement par conduction de la chaleur apportée par ailleurs au fond 30 (source gaz, électrique ou induction), lequel est donc a priori dépourvu de résistance électrique (cf. figures 1, 5-8, 20-22).

Figure 1 notamment, le moyen d'alimentation/production électrique 7 est ici une batterie. Il est logé dans le corps creux 29 de la poignée. Ce moyen 7 est en l'espèce une source (batterie) rechargeable. Pour concilier le rechargement (voir hypothétiquement le remplacement) de cette source 7 et le nettoyage de la poignée, on recommande que la poignée soit pourvue de moyens d'étanchéité 43.

Ces moyens d'étanchéité 43 - qui assureront l'étanchéité contre l'humidité, voire les liquides, de la source d'énergie électrique 7 - pourront être portés par le corps de préhension 29. Ils pourront comprendre un joint 45 disposé entre des(deux) coquilles 29a, 29b définissant ensemble le corps 29 et serrées ensemble par des vis 47 ; cf. figure 15. En outre, le logement 49 du corps 29 qui reçoit la source 7 est étanche. Il est fermé par un capot 51. Les moyens d'étanchéité comprennent un joint 43a disposé entre le capot 51 et le bord périphérique externe entourant le logement 49. Le joint 43a peut être un joint plat.

Selon un autre mode de réalisation possible illustré sur la figure 16, la source d'énergie électrique 7 est noyée par un enrobage 53 dans la matière formant le corps de préhension 29, lors du moulage de ce dernier.

Figures 15, 16 on voit également que les contacts électriques 25 récipient/élément porteur de la source 7 pourraient être horizontaux.

Concernant la fabrication d'un tel article culinaire, et en particulier de sa calotte 3 si elle réalisée selon l'une des hypothèses des figures 2-4, on recommande de procéder comme suit :
- on met en forme creuse le substrat, de manière qu'il présente alors un fond 30 et une paroi latérale 300 qui se dresse en périphérie du fond,
- et, avant ou après cette étape de mise en forme creuse, une résistance électrique 9 chauffante est fixée à l'endroit de la paroi latérale 300, à l'extérieur de la calotte, et favorablement en périphérie extérieure 30a1 de la (des) couche (s) métallique (s) 3a1, 3a2, 3a3, 3a4, 3a5 de cette paroi latérale.

Ceci permettra de choisir aisément la technique de pose de la résistance 9, sa forme et ses dimensions, sans interférer avec le revêtement déposé 3b ni la surface 13 qui doit être a priori uniforme. La fixation de la piste chauffante 9 pourra se faire notamment par sérigraphie, tampographie, décalcomanie, projection thermique.

On conseille toutefois que cette résistance soit fixée au récipient par dépôt. On recommande même que la résistance soit obtenue par le dépôt de pistes sérigraphiées comprenant au moins un matériau conducteur électrique. L'efficacité et la fiabilité attendues seront d'autant mieux atteintes.

Par ailleurs, concernant cette résistance 9 et comme déjà indiqué, elle sera alors raccordée à la source de production d'électricité 7 dont est pourvu l'article culinaire.

Pour la mise en forme de la calotte, on pourra prévoir notamment l'emboutissage, le fluotournage, le repoussage, la frappe, notamment à chaud.

Pour noyer la résistance 9, on pourra recourir à une frappe à froid ou à chaud, à un colaminage de plusieurs couches métalliques, voire à un moulage, voire même un brasage. Dans une solution avec colaminage, l'isolant 3c pourra ne pas entourer entièrement la résistance 9 : la doubler face aux deux couches métalliques adjacentes (par exemple 3a1, 3a2 figure 17) pourra être suffisant.

Quant à la fabrication de l'article dans ce cas, on conseille ce qui suit, également pour favoriser l'efficacité et la fiabilité attendues :
- a) on met en forme creuse le substrat 31, de manière qu'il présente alors le fond 30 et la paroi latérale 300 qui se dresse donc en périphérie du fond,
- b) et :
   * soit on noie dans ce substrat la résistance électrique 9 lors de cette mise en forme creuse,
   * soit, avant ou après l'étape a), on interpose une telle résistance entre deux couches métalliques électriquement conductrices , telles 3a1,3a2, que le substrat comprend alors, puis on noie cette résistance dans ce substrat,
- et on raccorde ladite résistance 9 à la source de production d'électricité 7 dont est donc pourvu l'article culinaire.

On recommande alors de noyer la résistance 9 dans le substrat 31 en liant entre elles lesdites deux couches métalliques électriquement conductrices, sans adhésif, par déformation et/ou liaison métallique physico-chimique.

Dans la présente description, on doit interpréter « métallique » comme métal ou alliage métallique.

Les figures 17, 18 sont chacune une alternative aux représentations des figures 2-4.

La résistance électrique 9 est toujours disposée à l'endroit de la paroi latérale 300.

Toutefois, elle est maintenant noyée dans ledit substrat, au sein :
- soit d'un matériau métallique électriquement conducteur moulé (figure 18),
- soit de plusieurs couches métalliques électriquement conductrices liées entre elles, sans adhésif, par déformation et/ou liaison métallique physico-chimique (figure 17).

Dans ces cas, pour une fiabilité de fabrication de la calotte et sécurité quant au fonctionnement dans le temps de la résistance, on recommande l'utilisation d'une résistance 9 entourée par une gaine ou couche électriquement isolante 3c. Le matériau métallique 3a1 (figure 18) ou les couches métalliques 3a1, 3a2 (figure 17) qui l'environnent sont électriquement conducteurs, comme conseillé précédemment figures 2-4.

Figure 17, il peut s'agir un colaminé. La résistance électrique 9 est noyée dans un composite métallique comprenant les deux couches électriquement conductrices 3a1, 3a2. Côté intérieur, le colaminé comprend encore intérieurement, contre la couche 3a1, une troisième couche métallique électriquement conductrice 3a3 qui peut être doublée intérieurement du revêtement anti-adhérent 3b déjà cité. On peut ainsi trouver successivement pour le substrat, de la couche intérieure 3a1 vers l'extérieur et donc en contacts directs deux à deux : Inox ou aluminium/aluminium/isolant/résistance /isolant/Inox ferritique.

Figure 18, la résistance électrique 9 est noyée dans un matériau métallique moulé 3a1. Ce matériau unique l'entoure entièrement. Le substrat 31 peut être en aluminium, voire en fonte. Intérieurement, ce substrat peut être doublé du revêtement anti-adhérent 3b déjà cité.

La couche 3b peut être appliquée avant ou après la déformation du substrat.

A noter que, de façon générale, il est possible qu'en liaison avec la formation sous pression de la paroi latérale 300 et la disposition de la résistance 9, on puisse donc renforcer avant ou après le fond 3, en lui rapportant un insert tel 19 (figure 6) et/ou des empreintes, telles celles 17, 170 des figures 5, 6.

Figure 19 est présentée une vue très locale d'un haut de calotte, avec une circulation électrique passant dans le substrat. Pour cela, une extrémité de la résistance 9 demeure isolée électriquement, l'extrémité opposée est non isolée.

Figure 20, une borne 25b de la poignée 5 (celle du bas) est en contact avec une première extrémité 25a de la résistance 9 isolée électriquement du substrat métallique de la calotte, tandis que l'extrémité opposée de cette résistance est non isolée électriquement dudit substrat conducteur. L'autre borne 25b (celle du haut ici) de la poignée 5 est en contact avec le métal conducteur de la calotte (substrat) qui forme alors la seconde borne 25a (celle du haut ici). Ce contact peut en particulier se situer à l'endroit de la tranche du bord supérieur 303 (ici du rebord 305). Ainsi, l'énergie électrique passera dans le substrat conducteur.

Figures 21, 22, on voit respectivement :
- une illustration d'une piste chauffante 9 (a priori obtenue par dépôt, telle une sérigraphie) comprenant plusieurs résistances indépendantes, telles 9a1, 9a2 (dont leurs valeurs de résistances peuvent être différentes entre elles),
- une illustration d'une piste chauffante comprenant ici deux résistances 9a1, 9a2 (dont les valeurs peuvent à nouveau être différentes : R1,R2). Dans ce cas, les résistances sont en séries : Rtot=R1+R2.

La position de la poignée 5 à fixer à la calotte (ici avec contacts verticaux) permet de choisir la localisation et la puissance de chauffe: plus on s'éloigne du U ici formé (voir figure), plus la zone chauffée et la puissance électrique sont importantes.

Ainsi, la résistance 9 latérale, en particulier s'il s'agit d'une piste chauffante déposée, peut comprendre plusieurs résistances. Dans le premier cas, ces résistances sont indépendantes, c'est-à-dire présentent des bornes de connections distinctes. Dans le deuxième cas, elles sont connectées entre elles et peuvent être chauffées simultanément.

Pour recharger la source électrique 7, s'il s'agit d'une batterie rechargeable, on prévoira de préférence des moyens de connexion électromagnétique 60 accessibles depuis l'extérieur de la poignée amovible 5.

Ces moyens 60 peuvent comprendre une prise femelle 61 du type prise « jack », comme illustré figure 23. Cette prise est disposée sur le corps de préhension 29. Elle est connectable au secteur via un cordon d'alimentation comprenant une fiche mâle type fiche « jack ».

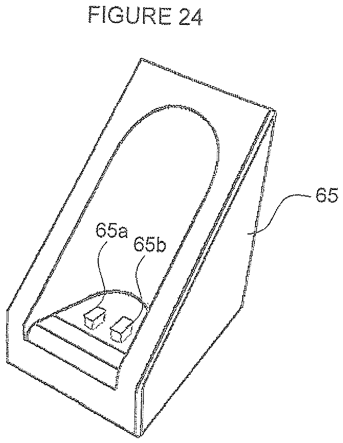

Comme illustré sur cette figure 23, les moyens de connexion électromagnétique 60 peuvent comprendre deux bornes de connexion électrique 63a, 63b connectables de façon amovible à deux bornes de connexion électrique complémentaires 65a, 65b prévues sur une base de rechargement 67 reliée au secteur et représentée sur la figure 24, pour permettre le rechargement de la source électrique 7.

En variante et comme représenté figure 25, les moyens de connexion électromagnétiques 60 peuvent comprendre une bobine d'induction secondaire 69 reliée à la source électrique 7. La bobine secondaire 69 est adaptée à recevoir un flux électromagnétique générée par une bobine d'induction primaire 71 prévue sur une base de rechargement 73.

Le corps de préhension 29 comprend une cavité 75 débouchant sur sa surface externe. La cavité 75 est entourée par la bobine d'induction secondaire 69 qui est logée à l'intérieur du corps de préhension 29. Le transfert d'énergie de la bobine d'induction primaire vers le secondaire 69 se fait sans contact entre ces dernières. Ces moyens de connexion magnétiques permettent de garantir l'étanchéité du corps de préhension 7 et forment des moyens de connexion étanches.

Comme on l'a déjà compris, plutôt que sur une poignée, la source électrique 7 pourrait donc, d'une façon générale, être prévue par exemple sur un couvercle. On pourrait alors prévoir que, couvercle posé sur le bord périmétrique 303, le contact des bornes (telles 25b) dont il serait pourvu avec celle(s) 25a du récipient viendrait conjuguer le chauffage de la paroi latérale 300 avec une situation de mijotage de l'aliment placé dans la calotte, via un chauffage doux du fond par la source 15.

Ci-avant, on aura aussi noté que le fond du récipient sera a priori dépourvu de bobine ou résistance électrique.

## Revendications

1. Article culinaire (1) comprenant :
- un récipient adapté à recevoir des aliments et comprenant un substrat (31) qui présente un fond (30) et une paroi latérale (300) se dressant en périphérie du fond (30), et une résistance électrique (9) chauffante disposée à l'endroit de la paroi latérale (300) du récipient,
- une source de production d'électricité (7) raccordée à la résistance électrique (9) pour l'alimenter électriquement,
**caractérisé en ce que** le substrat (31) est métallique et la résistance électrique (9) est disposée :
- soit à l'extérieur du substrat,
- soit noyée dans ledit substrat, au sein :
* soit d'un matériau métallique (3al) électriquement conducteur moulé,
* soit de plusieurs couches métalliques (3a1, 3a2, 3a3, 3a4, 3a5) électriquement conductrices liées entre elles, sans adhésif, par déformation et/ou liaison métallique physico-chimique,
et **en ce que** le fond (30), qui présente une surface inférieure (14) à poser en face d'une source (15) externe de chauffage comprenant l'une parmi : une plaque électrique, une flamme issue d'une source de gaz, une bobine (69, 71) d'induction pour un chauffage par induction du récipient, est adapté pour résister à la chaleur de ladite source (15) externe de chauffage et comprend pour cela :
- une structure de substrat multicouches (31), avec des métaux ou alliages métalliques différents (3al, 3a2, 3a3, 3a4, 3a5),
- et/ou au moins :
* une empreinte (17, 170) de rigidification,
* ou un insert (19) en un métal magnétisable qui est fixé à une couche métallique malléable du substrat et/ou qui est plus dur que cette couche malléable.

2. Article culinaire (1) selon la revendication 1, **caractérisé en ce que** la résistance électrique (9) est disposée exclusivement à l'endroit de la paroi latérale (300) du récipient, et le fond (30), qui présente une surface inférieure (14) à poser en face d'une source (15) externe de chauffage comprend l'une parmi : une plaque électrique, une flamme issue d'une source de gaz, une bobine (69, 71) d'induction pour un chauffage par induction du récipient, est adapté pour résister à la chaleur de ladite source (15) externe de chauffage et comprend pour cela :
- une structure de substrat multicouches (31), avec des métaux ou alliages métalliques différents (3a1, 3a2, 3a3, 3a4, 3a5),
- et/ou au moins :
* une empreinte (17, 170) de rigidification,
* ou un insert (19) en un métal magnétisable qui est fixé à une couche métallique malléable du substrat et/ou qui est plus dur que cette couche malléable.

3. Article culinaire (1) selon l'une au moins des revendications précédentes, **caractérisé en ce que** la résistance électrique (9), qui est disposée exclusivement à l'endroit de la paroi latérale (300) du récipient, est noyée dans le substrat métallique où elle est entourée d'une couche électriquement isolante (3c) qui la sépare dudit matériau métallique (3a) ou desdites couches métalliques (3a1, 3a2, 3a3, 3a4, 3a5) qui l'environnent et sont électriquement conductrices.

4. Article culinaire selon l'une au moins des revendications précédentes, **caractérisé en ce que** la paroi latérale (300) présentant une surface intérieure (13) orientée vers l'intérieur creux du substrat (31), et une surface extérieure (30a2) opposée, la résistance électrique (9) chauffante est un dépôt ainsi fixé, à l'endroit (300) de la surface extérieure de la paroi latérale, à une couche électriquement isolante (3c) qui est elle-même un dépôt ainsi fixé au substrat métallique.

5. Article culinaire selon l'une au moins des revendications précédentes, **caractérisé en ce que** la source (7) d'alimentation est prévue sur un ustensile de cuisine, accessoire du récipient, tel une poignée ou un couvercle.

6. Article culinaire selon la revendication 5, **caractérisé en ce que** l'ustensile de cuisine est une poignée (5) fixée au récipient pour le soulever et ainsi tenir en main l'article (1).

7. Article culinaire selon la revendication 5 ou 6, **caractérisé en ce que** :
- l'ustensile de cuisine (5) est amovible vis-à-vis du récipient par des moyens de fixation (21a, 21b) séparables entre eux, et
- la résistance électrique (9) et l'ustensile de cuisine (5) présentent des premières et des secondes bornes (25a, 25b) de contact électrique venant en contact entre elles quand l'ustensile de cuisine (5) et le récipient sont fixés ensemble.

8. Article culinaire selon les revendications 6 et 7, **caractérisé en ce que** les moyens de fixation (21a, 21b) comprennent ensemble deux mors (210a, 210b) formant pince, mobiles l'un par rapport à l'autre pour fixer la poignée (5) au récipient, lesdites secondes bornes (25b) de contact électrique étant disposées sur l'un au moins de ces mors (210a, 210b).

9. Article culinaire selon l'une des revendications 7, 8, **caractérisé en ce que** la/les seconde (s) borne (s) (25b) de la poignée (5) sont repoussés par des moyens de rappel élastique (27), pour limiter la résistance (9) de contact à moins lOOmOmhs, et de préférence à moins de lOmOmhs.

10. Article culinaire selon l'une au moins des revendications 7 à 9, **caractérisé en ce que** :
- les premières bornes (25a) sont des bornes en creux, et
- les secondes bornes (25b) de l'ustensile de cuisine (5) sont en saillie et utilisées avec des moyens de rappel élastique (27).

11. Article culinaire selon l'une au moins des revendications 5 à 10, **caractérisé en ce que** l'ustensile de cuisine (5) comprend :
- un corps creux (29),
- une source rechargeable d'énergie électrique (7), telle une batterie, logée dans ledit corps (29) et définissant ledit moyen de production d'électricité (7),
- des bornes (25a, 25b) de rechargement dont le corps (29) est pourvu et qui sont reliées à la source rechargeable d'énergie électrique (7), et des moyens d'étanchéité (43) pour protéger contre l'humidité ladite source rechargeable (7).

12. Article culinaire selon l'une au moins des revendications précédentes, **caractérisé en ce que** la résistance (9) comprend plusieurs résistances (9al, 9a2), lesquelles sont indépendantes ou connectées entre elles.

13. Article culinaire selon l'une au moins des revendications 1 à 12, **caractérisé en ce que** la résistance électrique (9) est fixée au récipient (3) par dépôt.

14. Article culinaire selon la revendication 13, **caractérisé en ce que** la résistance électrique (9) est obtenue par le dépôt de pistes sérigraphiées comprenant au moins un matériau conducteur électrique.

## Patentansprüche

1. Kochartikel (1), umfassend:
- einen Behälter, der eingerichtet ist, um Nahrungsmittel aufzunehmen, und ein Substrat (31), das einen Boden (30) und eine Seitenwand (300) aufweist, die an dem Umfang des Bodens (30) aufragt, und einen elektrischen Heizwiderstand (9) umfasst, der an der Stelle der Seitenwand (300) des Behälters angeordnet ist,
- eine Energieerzeugungsquelle (7), die an dem elektrischen Widerstand (9) angeschlossen ist, um ihn elektrisch zu versorgen,
**dadurch gekennzeichnet, dass** das Substrat (31) metallisch ist und der elektrische Widerstand (9) angeordnet ist:
- entweder außerhalb des Substrats,
- eingebettet in das Substrat, innerhalb:
* entweder eines metallischen, elektrisch leitenden, gegossenen Materials (3a1),
* oder mehrerer elektrisch leitender Metallschichten (3a1, 3a2, 3a3, 3a4, 3a5), die ohne Klebstoff durch eine Verformung und / oder physikalischchemische metallische Bindung miteinander verbunden sind.
dass der Boden (30), der eine untere Oberfläche (14) aufweist, die gegenüber einer externen Heizquelle (15) aufzustellen ist, eines umfasst von: einer elektrischen Platte, einer Flamme, die aus einer Gasquelle kommt, einer Induktionsspule (69, 71) zum Induktionsheizen des Behälters, wobei er eingerichtet ist, der Wärme der externen Heizquelle (15) standzuhalten und dafür umfasst:
- eine mehrschichtige Substratstruktur (31) mit unterschiedlichen Metallen oder Metalllegierungen (3a1, 3a2, 3a3, 3a4, 3a5),
- und / oder mindestens:
* eine Versteifungsprägung (17, 170),
* oder einen Einsatz (19) aus einem magnetisierbaren Metall, der an einer verformbaren metallischen Schicht des Substrats befestigt ist und / oder härter als diese verformbare Schicht ist.

2. Kochartikel (1) nach Anspruch 1, **dadurch gekennzeichnet, dass** der elektrische Widerstand (9) ausschließlich an der Stelle der Seitenwand (300) des Behälters angeordnet ist, und dass der Boden (30), der eine untere Oberfläche aufweist (14), die gegenüber einer externen Heizquelle (15) aufzustellen ist, eines umfasst von: einer elektrischen Platte, einer Flamme, die aus einer Gasquelle kommt, einer Induktionsspule (69, 71) zum Induktionsheizen des Behälters, wobei er eingerichtet ist, der Wärme der externen Heizquelle (15) standzuhalten und dafür umfasst:
- eine mehrschichtige Substratstruktur (31) mit unterschiedlichen Metallen oder Metalllegierungen (3a1, 3a2, 3a3, 3a4, 3a5),
- und / oder mindestens:
* eine Versteifungsprägung (17, 170),
* oder einen Einsatz (19) aus einem magnetisierbaren Metall, der an einer verformbaren metallischen Schicht des Substrats befestigt ist und / oder härter als diese verformbare Schicht ist.

3. Kochartikel (1) nach mindestens einem der vorhergehenden Ansprüche, **dadurch gekennzeichnet, dass** der elektrische Widerstand (9), der ausschließlich an der Stelle der Seitenwand (300) des Behälters angeordnet ist, in das Metallsubstrat eingebettet ist, wobei er von einer elektrisch isolierenden Schicht (3c) umgeben ist, die es von dem metallischen Material (3a) oder den metallischen Schichten (3a1, 3a2, 3a3, 3a4, 3a5) trennt, die ihn umgeben und elektrisch leitend sind.

4. Kochartikel nach mindestens einem der vorhergehenden Ansprüche, **dadurch gekennzeichnet, dass** die Seitenwand (300) eine innere Oberfläche, die zu dem hohlen Inneren (13) des Substrats (31) gerichtet ist, und eine gegenüberliegende äußere Oberfläche (30a2) aufweist, wobei der elektrische Heizwiderstand (9) eine Ablagerung ist, die so an der Stelle (300) der äußeren Oberfläche der Seitenwand an einer elektrisch isolierenden Schicht (3c) befestigt ist, die ihrerseits eine Ablagerung ist, die so an dem metallischen Substrat befestigt ist.

5. Kochartikel nach mindestens einem der vorhergehenden Ansprüche, **dadurch gekennzeichnet, dass** die Versorgungsquelle (7) an einem Küchenutensil, einem Zubehör des Behälters wie einem Griff oder einem Deckel, vorgesehen ist.

6. Kochartikel nach Anspruch 5, **dadurch gekennzeichnet, dass** das Küchenutensil ein Griff (5) ist, der an dem Behälter befestigt ist, um ihn anzuheben und somit den Artikel (1) in der Hand zu halten.

7. Kochartikel nach Anspruch 5 oder 6, **dadurch gekennzeichnet, dass**:
- das Küchenutensil (5) gegenüber dem Behälter mittels einer zwischen diesen trennbaren Befestigung (21a, 21b) abnehmbar ist, und
- der elektrische Widerstand (9) und das Küchenutensil (5) erste und zweite elektrische Kontakte (25a, 25b) aufweisen, die miteinander in Kontakt kommen, wenn das Küchenutensil (5) und der Behälter aneinander befestigt sind.

8. Kochartikel nach den Ansprüchen 6 und 7, **dadurch gekennzeichnet, dass** die Befestigungsmittel (21a, 21b) zusammen zwei Backen (210a, 210b) umfassen, die eine Klemme bilden und relativ zueinander bewegbar sind, um den Griff (5) an dem Behälter zu befestigen, wobei die zweiten elektrischen Kontaktanschlüsse (25b) an mindestens einer dieser Backen (210a, 210b) angeordnet sind.

9. Kochartikel nach einem der Ansprüche 7, 8, **dadurch gekennzeichnet, dass** der zweite Anschluss /die zweiten Anschlüsse (25b) des Handgriffs (5) durch elastische Rückstellmittel (27) zurückgedrückt werden, um den Kontaktwiderstand (9) auf weniger als 100 mOhm und vorzugsweise weniger als 10 mOhm zu begrenzen.

10. Kochartikel nach mindestens einem der Ansprüche 7 bis 9, **dadurch gekennzeichnet, dass**:
- die ersten Anschlüsse (25a) hohl sind, und
- die zweiten Anschlüsse (25b) des Küchenutensils (5) hervorstehen und mit elastischen Rückstellmitteln (27) verwendet werden.

11. Küchenartikel nach mindestens einem der Ansprüche 5 bis 10, **dadurch gekennzeichnet, dass** das Küchenutensil (5) umfasst:
- einen hohlen Körper (29),
- eine wiederaufladbare elektrische Energiequelle (7) wie eine Batterie, die in dem Körper (29) untergebracht ist und das Energieerzeugungsmittel (7) definiert,
- Ladeanschlüsse (25a, 25b), mit denen der Körper (29) versehen ist und die mit der wiederaufladbaren elektrischen Energiequelle (7) verbunden sind, und Dichtungsmittel (43) zum Schutz der wiederaufladbaren Quelle (7) vor Feuchtigkeit.

12. Kochartikel nach mindestens einem der vorhergehenden Ansprüche, **dadurch gekennzeichnet, dass** der Widerstand (9) mehrere Widerstände (9a1, 9a2) umfasst, die voneinander unabhängig oder miteinander verbunden sind.

13. Kochartikel nach mindestens einem der Ansprüche 1 bis 12, **dadurch gekennzeichnet, dass** der elektrische Widerstand (9) durch Ablagerung an dem Behälter (3) befestigt ist.

14. Kochartikel nach Anspruch 13, **dadurch gekennzeichnet, dass** der elektrische Widerstand (9) durch die Ablagerung von serigraphierten Spuren erhalten wird, die mindestens ein elektrisch leitendes Material umfassen.

## Claims

1. Kitchenware item (1) comprising:
- a pot suitable for receiving food and comprising a substrate (31) which has a bottom (30) and a side wall (300) rising at the periphery of the bottom (30), and a heating electrical resistance (9) arranged in the region of the side wall (300) of the pot,
- a source for the production of electricity (7) connected to the electrical resistance (9) in order to electrically supply it,
**characterised in that** the substrate (31) is metal and the electrical resistance (9) is arranged:
- either at the exterior of the substrate,
- or embedded in said substrate, within:
* either a moulded electroconductive metal material (3a1),
* or several electroconductive metal layers (3a1, 3a2, 3a3, 3a4, 3a5) that are interconnected, without adhesive, by deformation and/or physicochemical metal connection,
and **in that** the bottom (30), which has a lower surface (14) to be placed facing an external heating source (15) comprising one from: an electric plate, a flame coming from a source of gas, an induction coil (69, 71) for heating via induction of the pot, is adapted to resist the heat of said external heating source (15) and comprises for this:
- a multilayer substrate structure (31), with different metals or metal alloys (3a1, 3a2, 3a3, 3a4, 3a5),
- and/or at least:
* a stiffening imprint (17, 170),
* or an insert (19) made of a metal that can be magnetised which is fixed to a malleable metal layer of the substrate and/or which is harder than this malleable layer.

2. Kitchenware item (1) according to claim 1, **characterised in that** the electrical resistance (9) is arranged exclusively in the region of the side wall (300) of the pot, and the bottom (30), which has a lower surface (14) to be placed facing an external heating source (15) comprises one from: an electric plate, a flame from a source of gas, an induction coil (69, 71) for heating via induction of the pot, is adapted to resist the heat of said external heating source (15) and comprises for this:
- a multilayer substrate structure (31), with different metals or metal alloys (3a1, 3a2, 3a3, 3a4, 3a5),
- and/or at least:
* one stiffening imprint (17, 170),
* or an insert (19) made of a metal that can be magnetised which is fixed to a malleable metal layer of the substrate and/or which is harder than this malleable layer.

3. Kitchenware item (1) according to at least one of the preceding claims, **characterised in that** the electrical resistance (9), which is arranged exclusively in the region of the side wall (300) of the pot, is embedded in the metal substrate where it is surrounded with an electrically insulating layer (3c) which separates it from said metal material (3a) or from said metal layers (3a1, 3a2, 3a3, 3a4, 3a5) that surround it and which are electroconductive.

4. Kitchenware item according to at least one of the preceding claims, **characterised in that** the side wall (300) having an inside surface (13) oriented towards the hollow inside of the substrate (31), and an opposite outside surface (30a2), the heating electrical resistance (9) is a deposit that is as such fixed, in the region (300) of the outside surface of the side wall, to an electrically insulating layer (3c) which is itself a deposit fixed as such to the metal substrate.

5. Kitchenware item according to at least one of the preceding claims, **characterised in that** the source (7) of supply is provided on a kitchen utensil, accessory to the pot, such as a handle or a cover.

6. Kitchenware item according to claim 5, **characterised in that** the kitchen utensil is a handle (5) fixed to the pot in order to lift it and as such hold the item (1) by hand.

7. Kitchenware item according to claim 5 or 6, **characterised in that**:
- the kitchen utensil (5) is removable with respect to the pot by means of fastening (21a, 21b) that can be separated between them, and
- the electrical resistance (9) and the kitchen utensil (5) have first and second electrical contact terminals (25a, 25b) coming into contact with each other when the kitchen utensil (5) and the pot are fixed together.

8. Kitchenware item according to claims 6 and 7, **characterised in that** the means of fastening (21a, 21b) together comprise two jaws (210a, 210b) forming a clamp, mobile with respect to one another in order to fix the handle (5) to the pot, said second electrical contact terminals (25b) being arranged on at least one of these jaws (210a, 210b).

9. Kitchenware item according to one of claims 7, 8, **characterised in that** the second terminal or terminals (25b) of the handle (5) are pushed back by means of elastic recall (27), in order to limit the resistance (9) of contact to less than 100 mOmhs, and preferably to less than 10 mOmhs.

10. Kitchenware item according to at least one of claims 7 to 9, **characterised in that**:
- the first terminals (25a) are terminals with a hollow, and
- the second terminals (25b) of the kitchen utensil (5) are protruding and used with means of elastic recall (27).

11. Kitchenware item according to at least one of claims 5 to 10, **characterised in that** the kitchen utensil (5) comprises:
- a hollow body (29),
- a rechargeable source of electrical energy (7), such as a battery, housed in said body (29) and defining said means of producing electricity (7),
- recharging terminals (25a, 25b) of which the body (29) is provided and which are connected to the rechargeable source of electrical energy (7), and means of sealing (43) in order to protect said rechargeable source (7) from moisture.

12. Kitchenware item according to at least one of the preceding claims, **characterised in that** the resistance (9) comprises several resistances (9a1, 9a2), which are independent or connected together.

13. Kitchenware item according to at least one of claims 1 to 12, **characterised in that** the electrical resistance (9) is fixed to the pot (3) via deposition.

14. Kitchenware item according to claim 13, **characterised in that** the electrical resistance (9) is obtained by the deposition of silk-screened tracks comprising at least one electroconductive material.
